# EUROPEAN PATENT SPECIFICATION

(11) **EP 3 394 308 B1**
(45) Date of publication and mention of the grant of the patent: **28.10.2020**
(21) Application number: 16822250.3
(22) Date of filing: 22.12.2016
(51) Int. Cl.: C22C 38/00, C22C 38/02, C22C 38/04, C22C 38/06, C22C 38/42, C22C 38/44, C22C 38/46, C22C 38/48, C22C 38/52, B23K 35/30, C21D 6/00, C21D 9/50, C21D 1/18

(54) **A STEEL, A WELDING CONSUMABLE, A CAST, FORGED OR WROUGHT PRODUCT AND A WELDED PRODUCT**
STAHL, VERBRAUCHSMATERIAL ZUM SCHWEISSEN, GEGOSSENES, GESCHMIEDETES ODER GEHÄMMERTES PRODUKT UND GESCHWEISSTES PRODUKT
ACIER, CONSOMMABLE DE SOUDAGE, PRODUIT COULÉ, FORGÉ OU CORROYÉ, ET PRODUIT SOUDÉ

(30) Priority: 23.12.2015 GB 201522777; 08.04.2016 GB 201606014; 16.09.2016 GB 201615834
(43) Date of publication of application: 31.10.2018
(60) Divisional application: 20194567.2
(73) Proprietor: Goodwin Plc, Hanley Stoke-on-Trent ST1 3NR (GB)
(72) Inventor: GOODWIN, Richard Stanley, Croxton Staffordshire ST21 6PG (GB); GOODWIN, Bernard Rafe Ernest, Market Drayton Shropshire TF9 2AB (GB); ROBERTS, Stephen, Stone Staffordshire ST15 8YH (GB); BIRKS, Steven Charles, Stoke-on-Trent ST6 8PF (GB)
(74) Representative: J A Kemp LLP
(86) International application number: PCT/GB2016/054047
(87) International publication number: WO 2017/109501

(56) References cited:
- EP-A1- 0 867 256
- EP-A1- 2 832 487
- WO-A1-2013/064746
- JP-A- S5 893 593
- KR-A- 20140 083 169
- KR-A- 20150 074 700
- US-A- 4 765 953
- US-A- 4 816 085
- US-A- 6 129 999
- US-A1- 2005 158 201
- US-A1- 2013 316 193
- MEE VAN DER V ET AL: "HOW TO CONTROL HYDROGEN LEVEL IN (SUPER) DUPLEX STAINLESS STEEL WELDMENTS USING THE GTAW OR GMAW PROCESS", WELDING JOURNAL, AMERICAN WELDING SOCIETY, MIAMI, FL, US, vol. 78, no. 1, 1 January 1999 (1999-01-01), pages 7-S, XP000800822, ISSN: 0043-2296
- TAVARES S S M ET AL: "Influence of heat treatments at 475 and 400 °C on the pitting corrosion resistance and sensitization of UNS S32750 and UNS S32760 superduplex stainless steels", MATERIALS AND CORROSION, WILEY, vol. 63, no. 6, 1 June 2012 (2012-06-01), pages 522-526, XP001577113, ISSN: 0947-5117, DOI: 10.1002/MACO.201006016 [retrieved on 2011-03-24]
- DE MESSANO L V R ET AL: "The effect of biofouling on localized corrosion of the stainless steels N08904 and UNS S32760", INTERNATIONAL BIODETERIORATION & BIODEGRADATION, ELSEVIER, AMSTERDAM, NL, vol. 63, no. 5, 1 July 2009 (2009-07-01), pages 607-614, XP026139766, ISSN: 0964-8305, DOI: 10.1016/J.IBIOD.2009.04.006 [retrieved on 2009-05-07]
- BARNOUSH AFROOZ ET AL: "Oxygen argon plasma treatment effect on hydrogen uptake in austenitic stainless steels", INTERNATIONAL JOURNAL OF HYDROGEN ENERGY, ELSEVIER SCIENCE PUBLISHERS B.V., BARKING, GB, vol. 39, no. 26, 25 July 2014 (2014-07-25) , pages 14120-14131, XP029046913, ISSN: 0360-3199, DOI: 10.1016/J.IJHYDENE.2014.06.161

## Description

The present invention relates to a steel, a welding consumable, a cast, forged or wrought product, and a welded product. In particular the invention relates to steels such as those falling under the designation ASTM A995-13 Gr 6A, 1 December 2013 and to a welding consumable suitable for welding such steels and similar steels as well as a heat treatment suitable for such steels whether welded or not.

ASTM A995-13 Gr 6A, 1 December 2013 (6A) is a 25 % Chrome Super Duplex stainless steel (comprising mainly ferrite and austenite). Such Super Duplex steels have been made for over 40 years. Super Duplex stainless steels are extensively used where higher strength and corrosion resistance is required as compared to conventional 18/8/3 stainless steels such as 316 or the cast version ASTM A351 CF8M.

Traditionally CF8M has been and still is used for cryogenic applications such as liquefied natural gas (LNG) facilities. This is because CF8M provides good impact properties down to -196 Degrees C even in thick wall sections whereas Super Duplex stainless steel such as ASTM A995-13 6A, 1 December 2013 traditionally only has reasonable impact properties down to -46 degrees C and even then not at ½ thickness (T1/2) in very thick wall components where the wall thickness is 200mm or even 250mm and larger.

It is for this reason that the Norsok specification M630 for grade 6A only requires impact testing to be carried out at -46 Degrees C and for the following condition to be met for production castings.
Norsok M630 material data sheet MDS-D56: 45J average / 35J single minimum at -46° ¼ thickness (T1/4)

Norsok write many material specifications having researched globally what is best practice and what is achievable from high quality manufacturers. The Norsok specifications are used by many metallurgists and engineering designers, especially in the oil and gas industry, as an authoritative guide as to what metallurgical properties are possible to achieve in different alloys.

Many 25 % Cr Super Duplex stainless steel castings have been made for over 40 years. However, it has not been possible to guarantee higher impact properties at -46 degrees C than that which is specified in the Norsok Specification and even then not in thick walled components (e.g. with a thickness of over 150 mm or over 200mm or over 250mm).

KR 2015-0074700 discloses a super duplex stainless steel having excellent corrosion resistance and hot workability, which has two phases of a ferrite phase and an austenite phase having corrosion resistance and hot workability improved by optimizing tungsten (W) and molybdenum (Mo). The super duplex stainless steel having excellent corrosion resistance and hot workability comprises: 24 to 26 wt% of chromium (Cr); 6.0 to 8.0 wt% of nickel (Ni); 3.0 to 4.0 wt% of molybdenum (Mo); 0.2 to 0.3 wt% of nitrogen (N); 0 to 1 wt% of copper (Cu); 0 to 1 wt% of tungsten (W); and the remainder consisting of iron (Fe) and other inevitable impurities, wherein equation of wt%Mo + 1/2wt%W = 4% is satisfied and the ratio of wt%W/wt%Mo ranges from 0.16 to 0.18.

MEE VAN DER V ET AL: "HOW TO CONTROL HYDROGEN LEVEL IN (SUPER) DUPLEX STAINLESS STEEL WELDMENTS USING THE GTAW OR GMAW PROCESS", WELDING JOURNAL, AMERICAN WELDING SOCIETY, MIAMI, FL, US, vol. 78, no.1, 1 January 1999 (1999-01-01), pages 7-S, discloses Zeron 100M with a composition of %C:0.020; %Mn:0.055; %Si: 0.15; %P:0.018; %S:0.005; %Cr:25.8; %Ni: 7.4; %Mo:3.65; %Nb:n.d.; %Cu:0.69; %Ti:n.d.; %W:0.66; %N:0.22, remainder Ni.

KR 2014-0083169 discloses a duplex stainless steel and a manufacturing method thereof. The duplex stainless steel consists of 24 to 26 wt% of chromium (Cr), 6.0 to 8.0 wt% of nickel (Ni), 3.0 to 4.0 wt% of molybdenum (Mo), 0.5 to 1.0 wt% of tungsten (W), 0.5 to 1.0 wt% of copper (Cu), 0.24 to 0.32 wt% of nitrogen (N), and remaining amount of Fe and unavoidable impurities, wherein contents of Mo and W are in the range of 4.1 to 4.6. Ferrite and austenite phases exist in the duplex stainless steel.

US 2005/158201 discloses a high-grade duplex stainless steel with much suppressed formation of intermetallic phases, of which the chemical composition consists essentially, on a weight basis, of: Cr: 21.0%∼38.0%, Ni: 3.0%∼12.0%, Mo: 1.5%∼6.5%, W: 6.5% or less, Si: 3.0% or less, Mn: 8.0% or less, N: 0.2%∼0.7%, C: 0.1% or less, at least one element selected from the group consisting of Ba: 0.0001∼0.6% and one or more elements of Mischmetal (MM) and Y: 0.0001∼1.0% in total, and a balance of Fe and incidental impurities.

TAVARES S S M ET AL: "Influence of heat treatments at 475 and 400 °C on the pitting corrosion resistance and sensitization of UNS S32750 and UNS S32760 superduplex stainless steels", MATERIALS AND CORROSION, WILEY, vol. 63, no.6, 1 June 2012 (2012-06-01), pages 522-526, discloses UNS S32750 grade containing 24.57%Cr-6.68%Ni-3.75%Mo-0.83%Mn-0.34%Si-0.28%N-0.25%Cu-0.02% C, and UNS S32760 containing 25.20%Cr-7.00%Ni-3.70%Mo-0.64%Mn-0.35%Si-01.23%N-0.62%Cu-0.62%W-0.02%C (Wt%). Both steels contain less than 0.03wt% P and less than 0.02 wt% P and less than 0.02 wt% S.

DE MESSANO L V R ET AL: "The effect of biofouling on localized corrosion of the stainless steels N08904 and UNS S32760", INTERNATIONAL BIODETERIORATION & BIODEGRADATION, ELSEVIER, AMSTERDAM, NL, vo. 63, no. 5, 1 July 2009 (2009-07-01), pages 607-614 discloses a steel consisting of, in weight %, C:0.015, Si:0.28; Mn:0.49; P:0.019; S:0.000; Cr:25.0, Mo:3.59, Ni:7.11, Cu:0.58, N:0.21, W:0.54, balance Fe.

BARNOUSH AFROOZ ET AL: "Oxygen argon plasma treatment effect on hydrogen uptake in austenitic stainless steels", INTERNATIONAL JOURNAL OF HYDROGEN ENERGY, ELSEVIER SCIENCE PUBLISHERS B,V., BARKING GB, vol. 39, no. 26, 25 July 2014 (2014-07-25), pages 14120-14131, discloses a steel consisting of, in weight %, C:0.017; Si:0.23; Mn:0.51; S:0.001; P:0.027; Cr:24.92; Ni:7.31; W:0.53; Mo:3.6; Cu:0.6; N:0.253; Al:0.005, balance Fe.

US 6,129,999 discloses a welded high-strength steel structure with excellent SSC and corrosion resistance in a wet carbon dioxide environment having a low H2S concentration. A structure having a Vickers hardness of at most 350 and a joint tensile strength of at least 620 MPa and composed of a base metal comprising a martensitic stainless steel with a martensitic or tempered martensitic structure containing 0.001 to 0.05% C and 9 to 14% Cr and a weld metal comprising an austenitic-ferritic stainless steel having a duplex structure composed of austenite and 35 to 75% by volume of ferrite and containing 22 to 27% Cr,7 to 11% Ni and 1.5 to 5% Mo, and at most 0.03% C as an impurity.

The present invention relates to a specific chemistry for a ASTM A995-13 Gr 6A, 1 December 2013 type Super Duplex alloy that consistently provides superior impact properties up to 150 % higher than the Norsok specification at - 46 Degrees C and also provides acceptable impact properties (45J Av / 35J Min) at - 101 Degrees C.

The ASTM A488 weld qualification standard does not call up deep impact testing (that is through the depth of the weld) and nearly all impact testing of weld metal is normally carried out near the weld cap rather than the weld root.

It is for this reason that there is little knowledge of impact properties in thick Duplex welds. Data generated by an extensive programme of testing using commercially available Duplex welding wire or electrodes have shown that the impact properties of Weld metal at -46 Deg C in post weld solution treated castings severely decrease the further the tests progress down from the weld cap. At between 50mm and 100mm deep the impact properties are unacceptable as they are often in the single figures.

The adoption of the same or similar chemistry restrictions as determined in the inventive steel when applied to welding electrodes for 25% Cr Super Duplex alloy also provides greatly enhanced impact properties in weld metal deeper down from the weld cap than 25mm.

The present invention provides a steel consisting of, in mass %: 0.005 to 0.015% carbon; 0.05 to 0.35% silicon, 7.45 to 8.4% nickel; 1.00% or less manganese; 0.025% or less sulphur; 0.030% or less phosphorous; 24.0 to 26.0% chromium; 0.50 to 1.00% copper; 3.0 to 4.0% molybdenum; 0.75% or less cobalt; 0.010% or less niobium;0.015% or less aluminium; 0.20 to 0.30% nitrogen and 0.50 to 0.85% tungsten; 0.20% or less vanadium; the balance being iron and incidental impurities.

The invention is defined in the claims.

The adoption of the specific chemistry of the present invention controls on C, Si, Ni, Nb, and W (to minimise the presence of sigma phase) of the present invention result in the following:
1) Impact properties in ASTM A995-13 6A, 1 December 2013 that achieve up to and beyond 140J average / 100J single minimum at -46°C at both % and ½ T in 200mm thick sections and that still achieve the required Yield, UTS, elongation and corrosion properties as specified in the ASTM specification
2) Impact properties at -101 Deg C in ASTM A995-13 6A, 1 December 2013 in 200mm thick sections that consistently achieve 45J Av and 35 J Minimum.
   This level of mechanical performance and safety margin has historically never been achievable with thick section castings on a consistent basis.
3) If the same or similar chemistry limitations that are tighter than the ASTM specification is applied to a welding consumable (e.g. filler weld metal and welding electrodes) then impact properties in 100mm deep weld in 200mm thick Super Duplex stainless steel such as ASTM A995 6A will, in the post weld heat treated (solution treated and water quenched) or in the as-welded condition provide impact properties of up to 100J average / 80J single at - 46°C throughout the weld section thickness.

The present invention further provides for the use of the steel or welding consumable in a liquid petroleum gas (LPG) facility.

Further disclosed is a preferred method of heat treating a cast or forged or wrought product of a duplex stainless steel in the welded or unwelded condition, comprising: raising the temperature of the product to a first temperature between 1100 and 1150 deg C and holding at the first temperature; lowering the temperature of the product to a second temperature between 1040 and 1070 deg C and holding at the second temperature; and quenching the product in water from the second temperature. The casting or forging may be heat treated more conventionally just by raising the temperature of the casting to a first temperature between 1100 and 1150 deg C and holding at the first temperature. Both these two cycles also apply to welded castings.

The heat treatment may be applied to the inventive steel and inventive welding consumable as well as other Super Duplex stainless steels. Control differs from the ASTM heat treatment in that it is 1120 Deg C holding to allow the casting to heat through (for about 1 hour per inch of maximum casting cross section) followed by dropping the temperature to 1050 Deg C and holding for a further time (e.g. 5 hours) followed by a water quench.

The adoption of this heat treatment process, or in the case of welding no post weld heat treatment at all, will still produce impact properties some 50 % better than normal with the enhanced chemistry, but the stepped heat treatment of the present invention further improves the impact properties of both the base metal/steel of the present invention and the weld made of the welding consumable of the present invention.

The duplex stainless steel of the present invention has high impact properties in castings in the heat treated state. An already heat treated casting may be welded with a filler or rod to the invention chemistry and not subjected to post weld heat treatment and still have excellent impact resistance in both the base cast metal and the weld metal. The superior impact resistance and corrosion resistance is thought to be the result of a lower volume fraction of sigma phase in the microstructure of the steel. Sigma phase is an intermetallic compound which can be present in duplex stainless steel in addition to the austenite and ferrite which make up the remainder of the microstructure along with carbides, nitrides etc.. The absence of substantial amounts of sigma phase also means that large castings do not crack on having their temperature raised and lowered during heat treatment. Previously even raising the temperature slowly of a Super Duplex large casting has resulted in cracking of the casting.

The present invention will now be described by way of non-limiting example with reference to the following drawings.
Figure 1 is a table of the range of composition for a ASTM A995-13 Gr 6A dated 1 December 2013 steel
Figure 2 is a table of compositions and impact strengths of examples of the invention and comparative examples;
Figure 3 is a table of compositions and impact strengths of examples of the invention;
Figure 4 is a table of a welding consumable composition example;
Figure 5 is a schematic illustration of the dimensions of a 200mm weld test plate;
Figure 6 is a table showing impact results for a weld made of the welding consumable in Figure 4;
Figure 7 is a bar graph showing the improvement in impact resistance of a welding consumable of the presention invention compared to conventional weld consumable in the as welded condition; and
Figure 8 is a bar graph showing the improvement in impact resistance of a welding consumable of the presention invention compared to conventional weld consumable in the post weld heat treated condition.

The present invention relates to a steel with a composition which falls within ASTM A995-13 Gr 6A, 1 December 2013 and which has a tighter composition to increase low temperature impact resistance particularly in thick sections and at high depths, whilst maintaining the other physical requirements of ASTM A995-13 Gr 6A, 1 December 2013 such as yield, UTS, elongation, and corrosion resistance. It is thought that the inventive steel also has improved corrosion resistance compared to other steels falling in ASTM A995-13 Gr 6A, 1 December 2013. Improved corrosion resistance is also achieved.

In the present invention, compared to ASTM A995-13 duplex Grade 6A, 1 December 2013 the silicon content is relatively limited and/or the nickel content is relatively raised as well as specific quantities of carbon and tungsten, combined with limiting the amounts of niobium and aluminium result in the improved properties, thought to be at least in part due to the reduction in the presence of sigma phase that is formed during quenching following the solution heat treatment at the nominal 1120 Deg C

The reasons for restricting the chemical composition of the duplex stainless steel of the present invention compared to ASTM A995-13 Gr 6A, 1 December 2013 will now be described. An explanation of the effect of additions which are not varied from the ASTM standard is omitted.

All percentages are weight percent unless otherwise indicated. The term "consisting of' is used herein to indicate that 100% of the composition is being referred to and the presence of additional components is excluded so that the percentages add up to 100%.

### Carbon (C)

Carbon is effective for stabilizing austenitic phases. Its amount is 0.005% or more. However, the amount of carbon is limited as its solubility in both ferrite and austenite is limited. Thereby limiting the carbon amount to 0.020%, namely 0.005 to 0.020, reduces the risk of precipitation of carbides, particularly chromium carbides. Experiments have shown that limiting the carbon even further results in even higher impact resistance. In the invention, carbon is limited to 0.015% or less, preferably 0.0145% or less. Particularly for welding consumables (e.g. electrodes) a lower level of carbon of 0.0145% or less is preferred.

### Silicon (Si)

Silicon is present as a deoxidizer. A minimum amount of silicon of 0.05% or more, preferably 0.1% or more achieves sufficient deoxidation. However, the presence of silicon can lead to precipitation of unwanted intermetallic phases, including sigma phase. Therefore, the amount of silicon is limited to 0.35 mass per cent but preferably to 0.30% and preferably to 0.25%. It has been found that for higher levels of silicon, its presence in castings can be mitigated to some extent by high nickel composition as shown by the examples described below. Preferably the amount of silicon is limited to 0.30% or even 0.25% thereby to reduce the chance of sigma phase precipitation. The best properties are achieved with a combination of low silicon content (0.35% or less or preferably 0.30% or less and preferably 0.25% or less) combined with high nickel content of 7.45 to 8.4% or preferably 7.5 to 8.4%, more preferably 7.8 to 8.4% and more preferably 8.05 to 8.4% and most preferably 8.1 to 8.4%. Nickel content of 7.45 to below 7.8% achieves high impact performance, but impact performance improves even further at 7.8% or more nickel.

### Nickel (Ni)

Nickel is an austenite stabilizing element. Experiments have shown that increased nickel content improves impact resistance. A minimum amount of nickel of 7.45% leads to high impact resistance in the case that the presence of silicon is limited to 0.35% or less. A minimum amount of 7.8 % nickel achieves high impact resistance even at relatively high levels of silicon of up to 0.45 %. However, best results are achieved, whatever the level of silicon, at levels of nickel of 7.45% to 8.4%, preferably 7.5% to 8.4% and more preferably 7.8 to 8.4% and even more preferably 8.05 to 8.4% and most preferably 8.10 to 8.4%.

### Niobium (Nb)

Niobium is not referenced in the ASTM A995-13, 1 December 2013 standard. However, Niobium is detrimental to impact properties by the formation of carbides and/or nitrides as discovered by the present inventors. Niobium has an high affinity for nitrogen and as such more specifically forms nitrides that combine with the nitrogen present in the steel as an intentional alloying element. Niobium is preferably present in an amount of 0.002% or more or 0.003% or more. However, the presence of niobium in amounts of greater than 0.017% can lead to a reduction in the impact strength of the steel as shown by the attached examples. Therefore, the amount of niobium is limited to 0.010% for best performance. A level of 0.010% or less niobium is very low compared to most steels manufactured, which normally have a level of at least 0.015% up to 0.03%, though the precise level is often not controlled or reported because of niobium's prevalence at these concentrations. The ASTM specifications do not place any limitation on the level of niobium. In order to achieve a low niobium concentration, argon oxygen decarburization (AOD) refining or induction melting of pure chrome and also the use of ARMCO is necessary. In AOD refining temperature and silicon concentration are controlled whilst oxygen is blown in order to remove niobium whilst not removing other elements. The advantage of using the AOD process is that scrap metal (e.g. stainless, plate etc) can be used to keep the cost of raw materials down. For induction melting scrap metal may not be used as scrap contains too much niobium and so expensive starting materials need to be purchased.

### Tungsten (W)

Tungsten improves corrosion resistance, particularly resistance to pitting and crevice corrosion. In the present invention the amount of tungsten is between 0.50 to 0.85% as experiments have shown that this provides the best range for good impact resistance at low temperatures. Preferably the amount of tungsten is 0.64 to 0.84% or 0.66 to 0.84%.

### Aluminium

Aluminium is not referenced in the ASTM A995-13, 1 December 2013 standard. However, the amount of aluminium should be limited in order to reduce the precipitation of aluminium nitride, the presence of which can result in a loss of corrosion resistance and toughness. Therefore, the amount of aluminium is limited to 0.015% or less, preferably 0.010% or less.

### Sulphur

A lower level of sulphur than allowed by the ASTM specification is preferred to avoid the formation of sulphides in the steel and so improve impact resistance. A level of sulphur of 0.010% or less is preferred.

### Cobalt

Cobalt is often present in source nickel as the two elements are found together. Cobalt behaves in a similar way to nickel and so can be present at 0.75% or less, preferably 0.60% or less, more preferably 0.50% or less and most preferably 0.20% or less.

Incidental impurities may be present, preferably up to a maximum of 0.20%. Vanadium may be present to a maximum of 0.20%. Preferably vanadium is present at a level of 0.10% or less.

The presence of sigma phase can deleteriously effect impact resistance. Therefore preferably the volume fraction sigma phase in the steel is less than 0.25%, preferably less than 0.1%, most preferably no detectable sigma phase as measured under any of the procedures in ASTM A923 2014, preferably ASTM A923-14 method C.

### Preferred Steel

A preferred steel includes or consists of, in mass %: 0.005 to 0.015% carbon; 0.05 to 0.35 (or preferably 0.30%) silicon, 7.45 to 8.4% nickel (preferably 7.8 to 8.4% nickel); 1.00% or less manganese; 0.025% or less sulphur; 0.030% or less phosphorous; 24.0 to 26.0% chromium; 0.50 to 1.00% copper; 3.0 to 4.0% molybdenum; 0.75% or less cobalt; 0.010% or less niobium;0.015% or less aluminium; 0.20 to 0.30% nitrogen and 0.50 to 0.85% tungsten; the balance being iron and incidental impurities. Even more preferably the preferred steel includes or comprises 0.25% or less silicon and/or 0.0145% or less carbon and/or 8.0% or more nickel and/or 8.05% or more nickel and/or 0.010% or less sulphur and/or 0.002% or more niobium and/or 0.003% or more niobium.

### Preferred welding consumable

A preferred welding consumable includes or consists of, in mass %: 0.015% or less carbon; 0.05 to 0.35 (or preferably 0.30%) silicon, 7.45 to 10.5% nickel (preferably 7.8 to 10.5% nickel); 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium;0.015% or less aluminium; 0.20 to 0.30% nitrogen and 0.00 to 1.00% tungsten; the balance being iron and incidental impurities. Even more preferably the preferred welding consumable includes or comprises 0.25% or less silicon and/or 0.0145% or less carbon and/or 8.0% or more nickel and/or 8.05% or more nickel and/or 9.1% or more nickel and/or 9.3% or more nickel and/or 9.4% or more nickel and/or 0.010% or less sulphur and/or 0.002% or more niobium and/or 0.003% or more niobium.

### Example

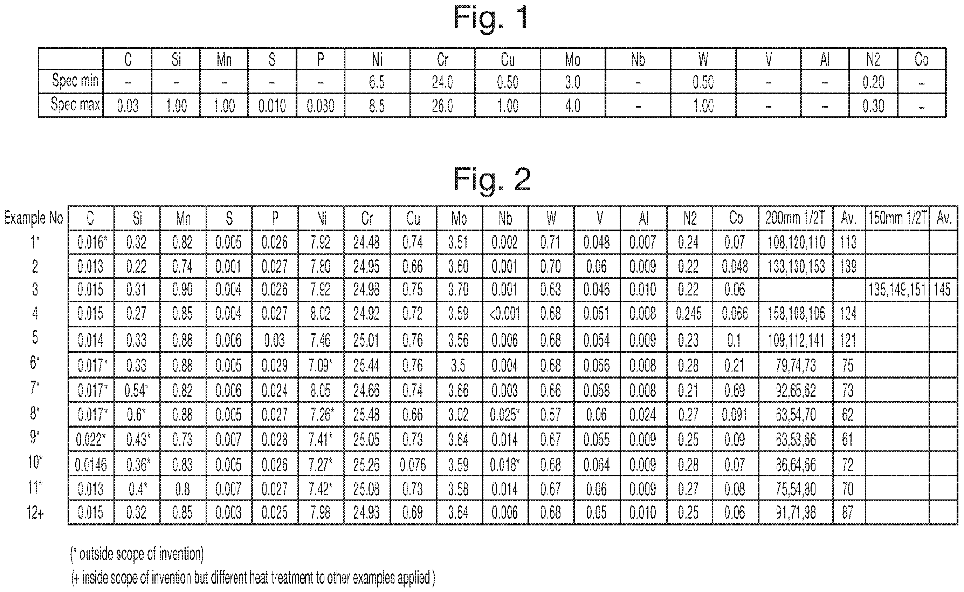

Super Duplex stainless steels having the chemical composition shown in Figure 2 were prepared. Castings of 200 mm thickness were prepared. These castings were heat treated at 1120°C where they were held for a time to allow through heating (e.g. 1 hour for every inch of thickness) before the temperature was dropped to 1050°C and held for five hours, followed by a water quench. In the case of example 3 the casting was 150 mm thick.

The heat treatment is designed such that all sigma phase dissolves in the austenite and ferrite phases at 1120°C. The temperature is then dropped to 1050°C, just above the solvus temperature of sigma, such that the maximum cooling rate can be achieved through out the thickness of the casting so as to avoid sigma and nitride precipitation as much as possible during cooling.

Charpy Impact tests were carried out using 10mm x 10mm x 55mm specimens to ASTM E23 Standard "Test methods for Notched Bar Impact Testing of Metallic Materials" revision 2012-C, at -46°C at half thickness and the results are given in figure 2.

As can be seen from figure 2, all of the examples in Table 1 have a composition falling within ASTM A995 Gr 6A, 1 December 2013. However, only those examples which are limited in carbon concentration to below 0.02%, in silicon concentration to 0.05-0.35% where the nickel concentration is between 7.10 and 8.4% or in silicon concentration to 0.05-0.45 % and a nickel concentration of 7.8 to 8.4%, have a niobium content of 0.017% or less, an aluminium content of 0.015% or less and a tungsten composition of 0. 50-0.85% achieve an average impact strength of above 120 Joules and a minimum of three tests of above 108 Joules. Vanadium is present as an incidental impurity. Cobalt is present less than 0.75%. Cobalt is present because is often present with nickel sources.

In the present invention an average impact strength (for a 200mm thick product) at ½ T is preferably at least 100 J and a minimum of three tests 80 J or more as measured by ASTM E23, 2012-C at -46°C.

Examples 2-4 are best performing in terms of impact strength and they have a silicon concentration of 0.05-0.35% as well as a nickel concentration of 7.8-8.4%. Examples 2 and 4 have best performance and fall within the most preferred composition with levels of carbon at or below 0.015% and silicon below 0.30% and at least 7.8% Ni. Example 5 has low carbon and silicon concentrations of 0.014% and 0.33% respectively and a reasonably high nickel concentration of 7.46%. This combination results in an impact strength of 121 Joules which is better than example 1, which has a higher carbon concentration.

Examples 6-11 fall compositionally outside the scope of the present invention and have impact resistances lower than 80 Joules. However even these examples exhibit increased impact resistance compared to the impact resistance achieved with 6A steels until now.

Example 6 has a low silicon concentration of 0.33%, but due to its low nickel concentration of 7.09% only has an impact strength of 75 Joules.

All of examples 8-11 include silicon and nickel in amounts falling outside the scope of the present invention and resulting in low impact strengths between 62 and 72 Joules.

Example 12 has a relatively low impact strength compared to examples 1-5 of 90 Joules. However example 12 was heat treated in a single step with a solution heat treatment at 1120 deg C for 10 hours followed by a water quench. This is thought to be the reason for the lower impact resistance compared with examples 1-5, though the impact resistance is better than that of examples 6-11 which fall outside the preferred composition but did have the two step heat treatment of the invention applied. The best performing examples of Figure 2 (examples 2-5 and 12) all have 0.015% or less carbon, 0.35% or less silicon, 0.010% or less niobium and 7.45% or more nickel.

Example 12 shows the improvement in impact resistance achieved by applying the two step heat treatment and also shows that the steel composition of the present invention achieves benefits in impact resistance even with a conventional heat treatment.

Thus the method of heat treating is a two stage heat treatment comprising raising the temperature of the casting to a first temperature where the sigma phase dissolves in the austenite and ferrite phases. The first temperature is in the range of 1100 to 1150 deg C. The casting is held at the first temperature for long enough for the casting to heat through such that the whole of the casting reaches the first temperature. As an example, the casting may be held at the first temperature for a minimum time in hours of the (maximum) thickness of the casting in inches divided by 2, preferably by 1 (i.e. one hour for each inch of thickness). The temperature of the casting is then reduced to a second temperature just above the solvus point of the sigma phase. The second temperature may be in the range of 1040 to 1070 deg C so long as it is above the sigma solvus temperature. The casting is held there long enough for the temperature to stabilize. As an example, the casting may be held at the second temperature for a minimum time in hours of the (maximum) thickness of the casting in inches divided by 4, preferably by 2 (i.e. half an hour for each inch of thickness). For example the casting is held there for 3 hours or more, for example for 5 hours. The time spent at each of the first and second temperatures is preferably limited to avoid excessive grain growth. The time spent at the first and second temperatures preferably does not exceed twice the maximum minimum amount of time specified above.

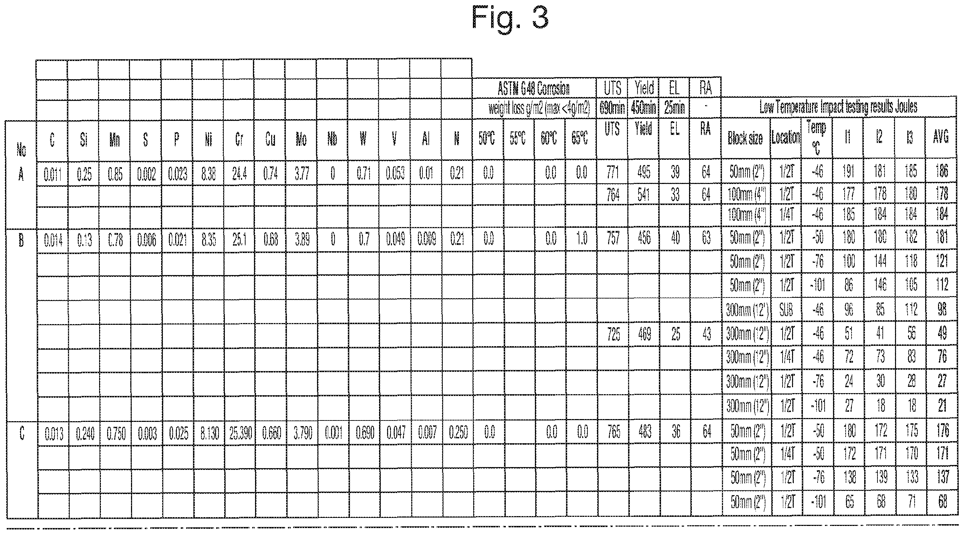

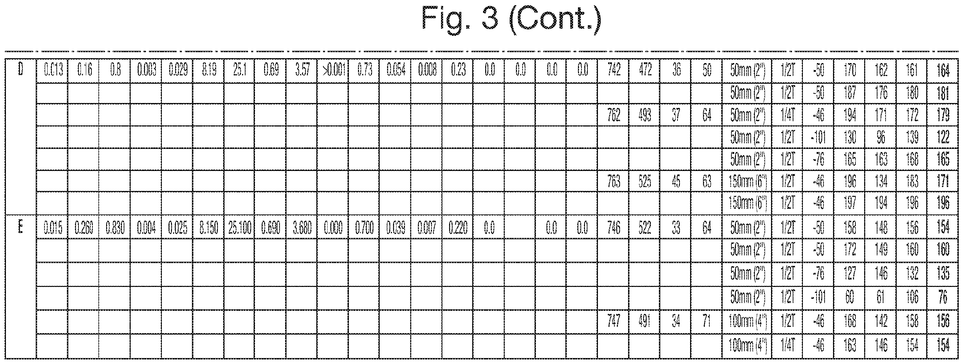

Figure 3 shows the results of further experiments which build on the results of Figure 2. Figure 3 includes results of corrosion tests, UTS and yield strengths as well as impact testing results for different casting sizes and at different temperatures. The way in which the castings were produced and tested are the same as explained with reference to examples 1-11 of Figure 2 except for the casting compositions, sizes and temperature of the impact tests which are detailed in Figure 3.

Example E has a composition close to that of example 4 and performs well in impact resistance at 50 and 100 mm 1/2T at all temperatures. Thus examples 2 and 4 and A-E show that limiting silicon to 0.30%, carbon to 0.015% and having at least 7.8% nickel with niobium below 0.010% results in very good impact properties. However, examples A, B, C and D, with even further limited carbon and silicon concentrations, perform even better in this regard without a loss in performance in the other areas tested.

Examples A-D show it is possible to achieve an average impact strength at 1/2T of 140J or more and a minimum of these tests of 105J or more as measured by ASTM E23, 2012-C at -46°C for section sizes of at least 50 mm and upto 150 mm (and expected at 200 mm). At -76°C averages of at least 90J and a minimum of 65J or more is achievable and at -101°C an average of at least 60J and a minimum of 45J can be achieved.

The corrosion results at 60°C compare with a weight loss of 8-65 g/m² in 24 hours measured for conventional 6A chemistry falling outside the present invention as reported in " Forging ahead with improvements in impact properties and corrosion resistance" S. Roberts, ASTM A995 Gr 6A demands a weight loss of less than 4 g/m² at 50°C, which is easily achieved by the present invention.

Large castings of Super Duplex stainless steel often require welding. This is either to join components (or parts of components) together or perhaps more commonly as weld repairs of casting defects. As described elsewhere, the impact resistance of welds at large thicknesses has not previously been investigated because the relevant ASTM standard does not require testing of welds at large thicknesses. Tests have shown that deep welds in 6A duplex using welding rods currently available achieve very low impact resistance at high depths (e.g. 25mm, 50 mm, 75mm and 98.5 mm) for a 100mm deep weld in a 200mm section thick casting. Often such welds have only achieved an impact resistance at such depths at -46 deg C of a few tens of Joules, and not consistently through out the depth and/or width of the weld.

The present inventors have found that by adopting the composition of the steel of the present invention in welding consumables when welding 6A steels, the impact resistances at high depths and across the width of the weld are vastly improved. In fact, it appears that even better impact properties of the weld can be achieved at higher nickel concentrations and lower carbon concentrations. This ensures a balance ferrite in the as welded condition. A welding consumable may have a composition of the steel of the present invention except for nickel content of up to 10.5% (preferably of up to 10.0%) and limit carbon to 0.015% or less, preferably 0.0145% or less carbon. In an embodiment the welding consumable has 8.05% or more nickel, preferably 8.1% or more nickel, more preferably 9.1% or more nickel, still more preferably 9.3% or more nickel and most preferably 9.4% or more nickel. Increasing nickel concentrations are thought further to minimise sigma formation. In the welding consumable compared to the base metal the amount of manganese may be increased to up to 2.00% as this can improve weldability. Reduced amounts of copper and tungsten are allowed in an embodiment compared to the base metal (0.00 to 1.00% and 0.00 to 1.00% respectively) to take into account 2507 type weld consumables which are not alloyed with either element. Compared to the base metal more chromium (24.0 to 27.0%) and/or more molybdenum (3.0 to 4.5%) are allowed in an embodiment to allow for composition balance adjustments in the weld metal spec.

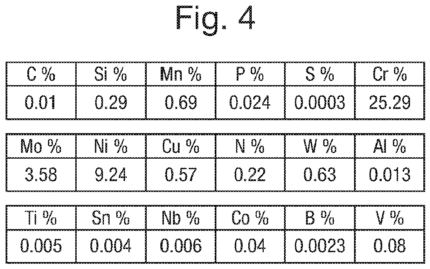

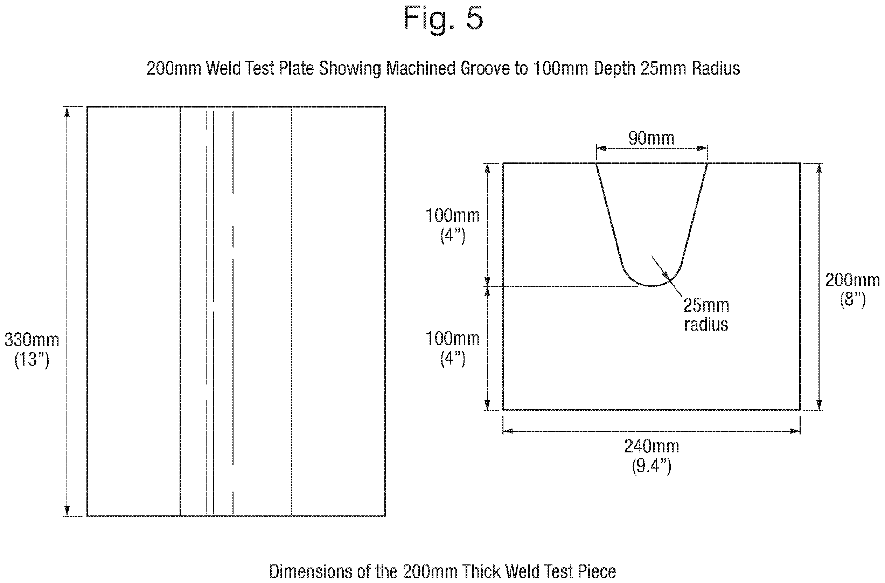

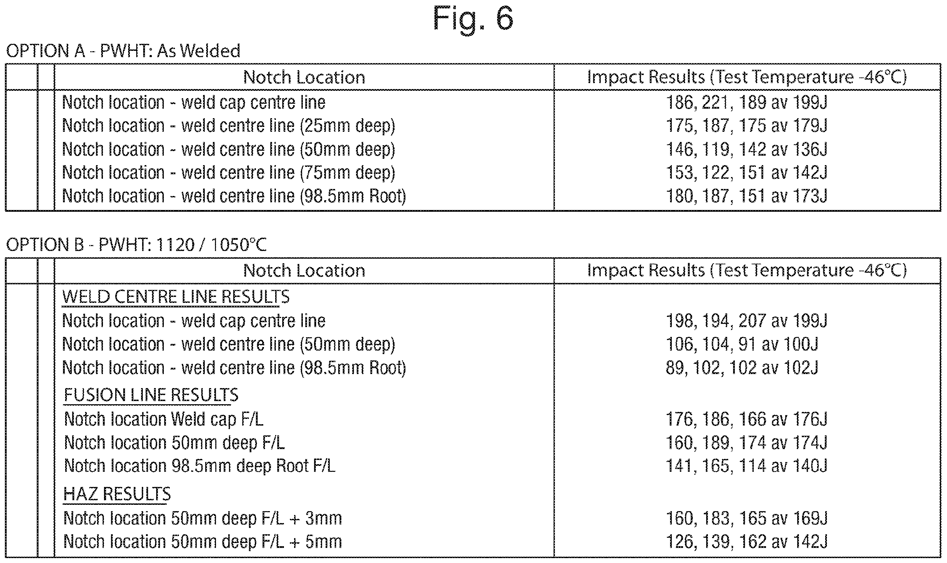

Figure 4 shows the composition of an example welding consumable. The welding consumable was used to fill a 100mm deep groove in a 200mm test plate whose dimensions are shown in Figure 5. Figure 6 shows the results of impact tests carried out at various depths through the weld metal, both in the as-welded condition (top) and in the post weld heat treated condition (the same conditions as applied to the castings described above, namely 1120 deg C followed by 1050 deg C and then a water quench). As the results show, the welding consumable of the present invention results in very high impact resistances in the as-welded condition and more than acceptable, though slightly lower, impact resistances in the heat treated condition.

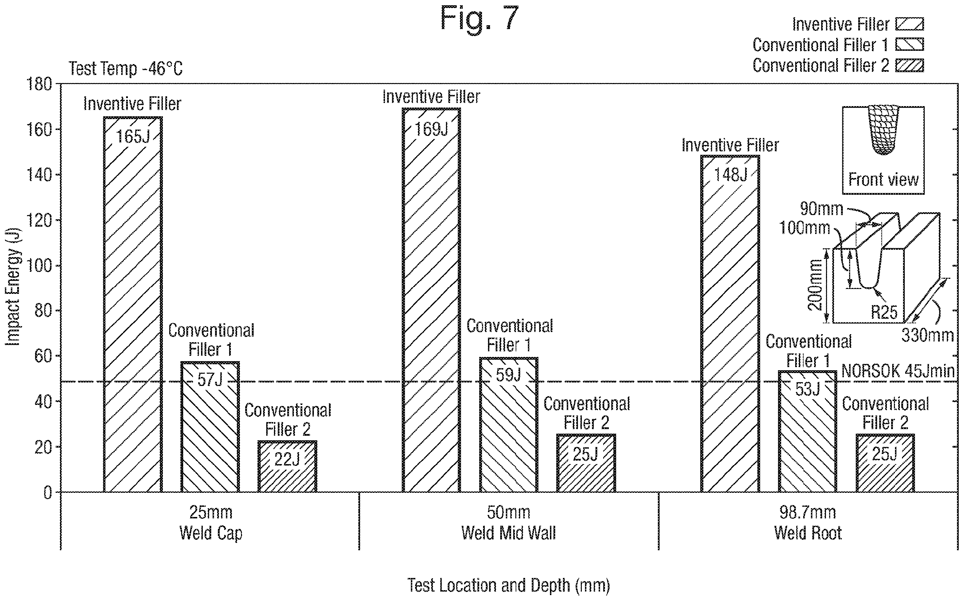

Figure 7 is a bar chart showing the as welded impact energy in J on the y axis at -46°C for a 100 mm deep weld which is 90 mm in width in a 200 mm x 330 mm elongate block at different depths (25 mm, 50 mm and 98.7 mm) at the weld centre for a weld consumable (filler) according to the present invention (best results), a conventional weld consumable over alloyed with nickel (middle results) and a conventional weld consumable with a composition falling within the ASTM specification (worst results). The compositions of the two conventional fillers are as follows:

| | **C** | **Si** | **Mn** | **S** | **P** | **Ni** | **Cr** | **Cu** | **W** | **Mo** | **N** |
|---|---|---|---|---|---|---|---|---|---|---|---|
| Over Alloyed Ni Filler | 0.03 | 0.69 | 1.07 | 0.005 | 0.017 | 9.6 | 24.6 | 0.10 | 0.03 | 3.5 | 0.22 |
| 6A Matching Filler (Cu) | 0.025 | 0.61 | 1.01 | 0.015 | 0.019 | 7.8 | 24.6 | 0.65 | 0.71 | 3.6 | 0.27 |

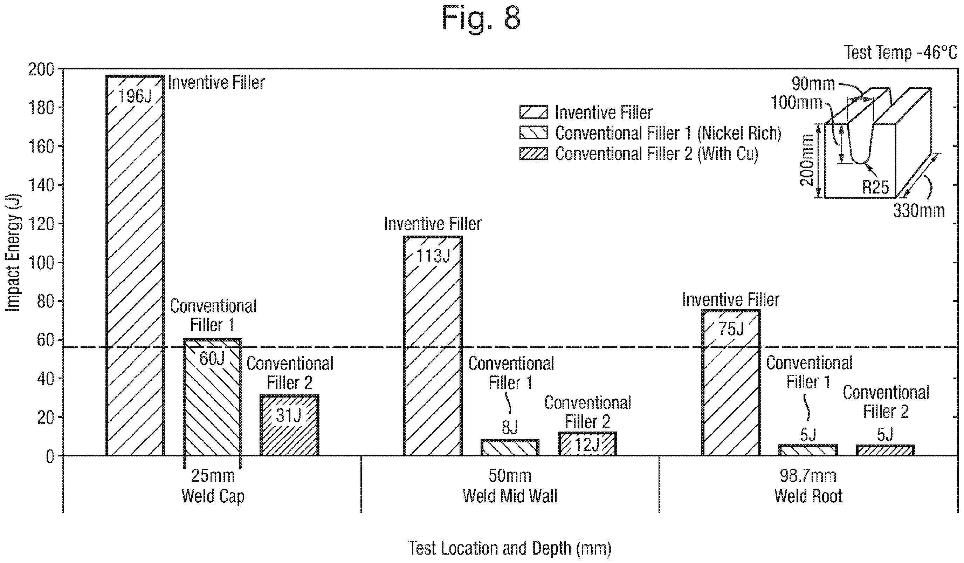

Figure 8 is the same as Figure 7 except that the samples are in the post weld heat treated condition, namely solution treatment of 1120°C for 1 hour per inch thickness, followed by 1050°C until equalised, followed by a water quench. The results in Figures 7 and 8 show the improvement in impact resistance of the present invention over conventional weld consumables.

## Claims

1. A steel consisting of, in mass %: 0.005 to 0.015% carbon; 0.05 to 0.35% silicon, 7.45 to 8.4% nickel; 1.00% or less manganese; 0.025% or less sulphur; 0.030% or less phosphorous; 24.0 to 26.0% chromium; 0.50 to 1.00% copper; 3.0 to 4.0% molybdenum; 0.010% or less niobium; 0.75% or less cobalt; 0.015% or less aluminium; 0.20 to 0.30% nitrogen; 0.50 to 0.85% tungsten; 0.20% or less vanadium; the balance being iron and incidental impurities.

2. The steel of claim 1, including 7.5% or more nickel, preferably 7.8% or more nickel, most preferably 8.00% or more nickel.

3. The steel of claim 1, including 8.05% or more nickel.

4. The steel of any of claims 1-3, including 8.1% or more nickel.

5. The steel of any of the preceding claims, including 0.005 to 0.0145% carbon.

6. The steel of any of the preceding claims, including 0.05 to 0.30% silicon, preferably 0.05 to 0.25% silicon, most preferably 0.10 to 0.25% silicon.

7. The steel of any one of claims 1-6, including 0.002% or more niobium.

8. The steel of any one of claims 1-7, including 0.003% or more niobium.

9. The steel of any of claims 1-8, including 0.010% or less sulphur.

10. The steel of any one of claims 1-9, including 0.64 to 0.84% tungsten, preferably 0.66% to 0.84% tungsten.

11. The steel of any one of claims 1-10, including 0.010% or less aluminium.

12. The steel of any of claims 1-11, wherein a volume fraction of sigma phase in the steel is less than 0.25%, preferably less than 0.1%, most preferably no detectable sigma phase as measured under ASTM A923 2014.

13. The steel of any of claims 1-12, wherein an average impact strength at ½ thickness is 100 J or more and a minimum of three tests of 80 J or more as measured by ASTM E23, 2012-C at -46°C, preferably
wherein an average impact strength at ½ thickness is 140 J or more and a minimum of three tests of 105 J or more as measured by ASTM E23, 2012-C at -46°C.

14. A cast, forged or wrought product formed of a steel according to any of claims 1-13.

15. A welded product comprising a base metal and a weld metal wherein the base metal is a duplex steel according to any of claims 1-14 and the weld metal consists of, in mass %: 0.015 % or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.

## Patentansprüche

1. Stahl, bestehend aus, in Masse-%: 0,005 bis 0,015 % Kohlenstoff; 0,05 bis 0,35 % Silizium, 7,45 bis 8,4 % Nickel; 1,00 % oder weniger Mangan; 0,025 % oder weniger Schwefel; 0,030 % oder weniger Phosphor; 24,0 bis 26,0 % Chrom; 0,50 bis 1,00 % Kupfer; 3,0 bis 4,0 % Molybdän; 0,010 % oder weniger Niobium; 0,75 % oder weniger Cobalt; 0,015 % oder weniger Aluminium; 0,20 bis 0,30 % Stickstoff; 0,50 bis 0,85 % Wolfram; 0,20 % oder weniger Vanadium; wobei der Rest Eisen und zufällige Verunreinigungen ist.

2. Stahl nach Anspruch 1, einschließlich 7,5 % oder mehr Nickel, bevorzugt 7,8 % oder mehr Nickel, am bevorzugtesten 8,00 % oder mehr Nickel.

3. Stahl nach Anspruch 1, einschließlich 8,05 % oder mehr Nickel.

4. Stahl nach einem der Ansprüche 1-3, einschließlich 8,1 % oder mehr Nickel.

5. Stahl nach einem der vorhergehenden Ansprüche, einschließlich 0,005 bis 0,0145 % Kohlenstoff.

6. Stahl nach einem der vorhergehenden Ansprüche, einschließlich 0,05 bis 0,30 % Silizium, bevorzugt 0,05 bis 0,25 % Silizium, am bevorzugtesten 0,10 bis 0,25 % Silizium.

7. Stahl nach einem der Ansprüche 1-6, einschließlich 0,002 % oder mehr Niobium.

8. Stahl nach einem der Ansprüche 1-7, einschließlich 0,003 % oder mehr Niobium.

9. Stahl nach einem der Ansprüche 1-8, einschließlich 0,010 % oder weniger Schwefel.

10. Stahl nach einem der Ansprüche 1-9, einschließlich 0,64 bis 0,84 % Wolfram, bevorzugt 0,66 % bis 0,84 % Wolfram.

11. Stahl nach einem der Ansprüche 1-10, einschließlich 0,010 % oder weniger Aluminium.

12. Stahl nach einem der Ansprüche 1-11, wobei ein Volumenanteil von Sigma-Phase im Stahl weniger als 0,25 % ist, bevorzugt weniger als 0,1 %, am bevorzugtesten keine erfassbare Sigma-Phase, gemessen unter ASTM A923 2014.

13. Stahl nach einem der Ansprüche 1-12, wobei eine durchschnittliche Schlagfestigkeit bei ½ Dicke 100 J oder mehr und ein Minimum von drei Tests von 80 J oder mehr beträgt, gemessen durch ASTM E23, 2012-C bei -46 °C, bevorzugt
wobei eine durchschnittliche Schlagfestigkeit bei ½ Dicke 140 J oder mehr und ein Minimum von drei Tests von 105 J oder mehr beträgt, gemessen durch ASTM E23, 2012-C bei -46 °C.

14. Gegossenes, geschmiedetes oder bearbeitetes Produkt, gebildet aus einem Stahl nach einem der Ansprüche 1-13.

15. Geschweißtes Produkt, umfassend ein Basismetall und ein Schweißmetall, wobei das Basismetall ein Duplexstahl nach einem der Ansprüche 1-14 ist und das Schweißmetall aus Folgendem in Masse-% besteht: 0,015 % oder weniger Kohlenstoff; 0,05 bis 0,35 % Silizium, 7,45 bis 10,5 % Nickel; 2,00 % oder weniger Mangan; 0,025 % oder weniger Schwefel; 0,030 % oder weniger Phosphor; 24,0 bis 27,0 % Chrom; 0,00 bis 1,00 % Kupfer; 3,0 bis 4,5 % Molybdän; 0,75 % oder weniger Cobalt; 0,010 % oder weniger Niobium; 0,015 % oder weniger Aluminium; 0,20 bis 0,30 % Stickstoff; 0,00 bis 1,00 % Wolfram; wobei der Rest Eisen und zufällige Verunreinigungen ist.

## Revendications

1. Acier constitué, en % en masse, de : 0,005 à 0,015 % de carbone ; 0,05 à 0,35 % de silicium, 7,45 à 8,4 % nickel ; 1,00 % ou moins de manganèse ; 0,025 % ou moins de soufre ; 0,030 % ou moins de phosphore ; 24,0 à 26,0 % de chrome ; 0,50 à 1,00 % de cuivre ; 3,0 à 4,0 % de molybdène ; 0,010 % ou moins de niobium ; 0,75 % ou moins de cobalt ; 0,015 % ou moins d'aluminium ; 0,20 à 0,30 % d'azote ; 0,50 à 0,85 % de tungstène ; 0,20 % ou moins vanadium ; le reste étant du fer et des impuretés incidentelles.

2. Acier selon la revendication 1, incluant 7,5 % ou plus de nickel, de préférence 7,8 % ou plus de nickel, idéalement 8,00 % ou plus de nickel.

3. Acier selon la revendication 1, incluant 8,05 % ou plus de nickel.

4. Acier selon l'une quelconque des revendications 1 à 3, incluant 8,1 % ou plus de nickel.

5. Acier selon l'une quelconque des revendications précédentes, incluant de 0,005 à 0,0145 % de carbone.

6. Acier selon l'une quelconque des revendications précédentes, incluant de 0,05 à 0,30 % de silicium, de préférence de 0,05 à 0,25 % de silicium, idéalement de 0,10 à 0,25 % de silicium.

7. Acier selon l'une quelconque des revendications 1 à 6, incluant 0,002 % ou plus de niobium.

8. Acier selon l'une quelconque des revendications 1 à 7, incluant 0,003 % ou plus de niobium.

9. Acier selon l'une quelconque des revendications 1 à 8, incluant 0,010 % ou moins de soufre.

10. Acier selon l'une quelconque des revendications 1 à 9, incluant de 0,64 à 0,84 % de tungstène, de préférence de 0,66 % à 0,84 % de tungstène.

11. Acier selon l'une quelconque des revendications 1 à 10, incluant 0,010 % ou moins d'aluminium.

12. Acier selon l'une quelconque des revendications 1 à 11, dans lequel une fraction volumique de phase sigma dans l'acier est inférieure à 0,25 %, de préférence inférieure à 0,1 %, idéalement aucune phase sigma n'est détectable, la mesure étant effectuée selon ASTM A923 2014.

13. Acier selon l'une quelconque des revendications 1 à 12, dans lequel une résistance à l'impact moyenne à épaisseur de demi-atténuation est de 100 J ou plus et a un minimum de trois essais de 80 J ou plus, la mesure étant effectuée selon ASTM E23, 2012-C à -46°C, de préférence
dans lequel une résistance à l'impact moyenne à épaisseur de demi-atténuation est de 140 J ou plus et a un minimum de trois essais de 105 J ou plus, la mesure étant effectuée selon ASTM E23, 2012-C à -46°C.

14. Produit coulé, forgé ou travaillé formé d'un acier selon l'une quelconque des revendications 1 à 13.

15. Produit soudé, comprenant un métal de base et un métal fondu, dans lequel le métal de base est un acier duplex selon l'une quelconque des revendications 1 à 14 et le métal fondu est constitué, en % en masse, de : 0,015 % ou moins de carbone ; 0,05 à 0,35 % de silicium, 7,45 à 10,5 % de nickel ; 2,00 % ou moins de manganèse ; 0,025 % ou moins de soufre ; 0,030 % ou moins de phosphore ; 24,0 à 27,0 % de chrome ; 0,00 à 1,00 % de cuivre ; 3,0 à 4,5 % de molybdène ; 0,75 % ou moins de cobalt ; 0,010 % ou moins de niobium ; 0,015 % ou moins d'aluminium ; 0,20 à 0,30 % d'azote; 0,00 à 1,00 % de tungstène; le reste étant du fer et des impuretés incidentelles.
